# EUROPÄISCHE PATENTSCHRIFT

(11) **EP 3 105 461 B1**
(45) Veröffentlichungstag und Bekanntmachung des Hinweises auf die Patenterteilung: **15.05.2019**
(21) Anmeldenummer: 15705195.4
(22) Anmeldetag: 06.02.2015
(51) Int. Cl.: F16B 33/06, F16B 39/02

(54) **MASCHINENELEMENT**
MACHINE ELEMENT
ÉLÉMENT DE MACHINE

(30) Priorität: 11.02.2014 DE 102014002192
(43) Veröffentlichungstag der Anmeldung: 21.12.2016
(73) Patentinhaber: Spieth-Maschinenelemente Gmbh & Co Kg, 73730 Esslingen (DE)
(72) Erfinder: HUND, Alexander, 73773 Aichwald (DE)
(74) Vertreter: Bartels und Partner, Patentanwälte
(86) Internationale Anmeldenummer: PCT/EP2015/000242
(87) Internationale Veröffentlichungsnummer: WO 2015/120967

(56) Entgegenhaltungen:
- CH-A- 525 980
- GB-A- 510 144
- GB-A- 2 134 615
- GB-A- 2 144 819

## Beschreibung

Die Erfindung betrifft ein Maschinenelement, insbesondere in Form einer Stellmutter, aufweisend einzelne Ringkomponenten, die an Drittbauteilen, wie beispielsweise Achsen, Naben oder Wellen, mittels Innen- und/oder Außengewinde festlegbar sind, von denen mindestens eine Ringkomponente auf mindestens eine weitere Ringkomponente in einer axialen Richtung gesehen mittels einer Einstelleinrichtung mit mehreren Spannschrauben in einer Zustellbewegung von einer Montagestellung in eine Festlegestellung und umgekehrt bewegbar ist, wobei mindestens die eine und die andere Ringkomponente als eigenständige Bauteile ausgeführt sind, die mit ihren benachbart einander zugewandten Stirnseiten einen Abstandsraum begrenzen, der nach allen Seiten sich zur Umgebung hin öffnet, wobei ausschließlich die Spannschrauben der Einstelleinrichtung den Abstandsraum durchgreifen und wobei alle möglichen Einstellpositionen der jeweiligen Ringkörper zueinander zwischen der Montage- und der Festlegestellung mittels dieser Spannschrauben veranlasst sind.

GB 510 144 A offenbart bereits ein solches Maschinenelement, das als Verbundmutter ausgeführt ist. Diese Verbundmutter umfasst zwei Muttern die voneinander beabstand angeordnet sind und durch eine Vielzahl von Schrauben miteinander verbunden sind. Die Schrauben durchsetzen die eine Mutter und sind in die andere Mutter eingeschraubt. Die zusammengesetzte Mutter wird als eine Einheit auf eine Spindel oder Welle aufgeschraubt, bis die Mutter einen Innenring eines Kegelrollenlagers in einer gewünschten Einstellposition hält. Danach werden die Schrauben angezogen und legen die Muttern auf der Spindel bzw. der Welle fest. CH 525 980 A offenbart eine Begrenzungsscheibe mit einer Nabe, in die eine Nabenbüchse eingegossen ist, welche mit einer Gegenmutter verschraubt ist. In der Gegenmutter sind drei je um 120° gegeneinander versetzte Bohrungen vorgesehen. Diese können mit Sacklochbohrungen der Nabenbüchse zur Deckung gebracht werden, um die Nabenbüchse und die Gegenmutter mittels Schrauben miteinander zu verspannen.

Solche Maschinenelemente lassen sich für eine Vielzahl von möglichen Anwendungsgebieten einsetzen. Erfolgt die Verwendung des Maschinenelements als Spannsatz, erlaubt dies aufgrund des Ringkomponentenaufbaus mit Einstelleinrichtung das Herstellen von kraftschlüssigen WellenNaben-Verbindungen. Bei derartigen Anwendungen wird darauf geachtet, dass die Geometrie der eingesetzten einzelnen komponentenartigen Ringkörper eine möglichst absolut symmetrische Einheit ergibt, was bei einem axialen Zusammendrücken der Ringkomponenten mittels der Einstelleinrichtung zu einer gleichmäßigen Querkontraktion in Richtung Welle und Nabe führt, so dass eine Zentrierwirkung erzielbar ist, die auf dem Niveau des sog. Hydrodehnprinzip einzuordnen ist. Um eine hohe Krafteinleitung über die Einstelleinrichtung zu ermöglichen, werden im Wesentlichen für die einzelnen Ringkomponenten Stahlmaterialien zum Einsatz gebracht.

Eine weitere Anwendung als Maschinenelement betrifft Führungsbuchsen, die runde Linearführungselemente für den Maschinen- und -vorrichtungsbau darstellen. Der Einsatz solcher Führungsbuchsen ist dann angezeigt, wenn die Vorteile der Gleitführung, z.B. hohe Dämpfung, genutzt werden sollen und dabei gleichzeitig geringstes Führungsspiel verlangt wird. So werden die Führungsbuchsen insbesondere an Führungsgestellen, an Rundschlittenführungen sowie an Reitstockpinolen zum Einsatz gebracht. Zusätzlich zur angesprochenen Linearbewegung sind auch gleichzeitige Drehbewegungen möglich, wobei jedoch aus schmiertechnischen Gründen heraus eine reine Drehbewegung im Sinne eines Gleitlagers hierbei nicht realisiert wird. Da mit den Führungsbuchsen für jeden Betriebszustand optimal ein Fügespiel einstellbar sein soll, können hierbei nachgiebige Materialien eingesetzt werden, beispielsweise in Form von Bronze-Werkstoffen.

Da hydrodynamisch geschmierte, einstellbare Mehrflächen-Radialgleitlager, wie sie hauptsächlich im Maschinenbau zum Einsatz kommen, gleichfalls mittels einer Einstelleinrichtung gegeneinander verspannbare Ringkomponenten aufweisen, lassen sich die für Spannsätze und Führungsbuchsen entwickelten Grundlösungen auch auf solche Radialgleitlagerlösungen übertragen.

Besonders bevorzugt sind hier jedoch sog. Stellmutterlösungen oder Gewinderinge angesprochen, die mit äußerster Genauigkeit und gleichmäßigen Klemmkräften bezogen auf ihre Gewindeflanken sich auf Spindelgewinden und dergleichen mehr als Drittbauteile festlegen lassen.

Ein Vertreter einer solchen Stellmutter als Maschinenelement ist in der DE 25 44 498 C3 aufgezeigt. Bei dieser bekannten Lösung handelt es sich im Sinne einer Stellmutter um einen Gewindering, welcher zwar einstückig ausgebildet ist, jedoch durch eine von der Außenumfangsfläche ausgehende Ringnut und durch eine versetzt dazu angeordnete, von der Innenumfangsfläche ausgehende Ringnut in Ringkomponenten unterteilt ist, von denen eine als Konterring dient, zwischen denen sich ein die Ringnuten überbrückender wesentlich schmälerer Zwischenring befindet, der an seinem Innenumfang mit einem der Ringe und an seinem Außenumfang mit dem anderen dieser Ringe verbunden ist, wobei der Konterring und der Zwischenring aufseiten ihrer Verbindungsstelle ein gemeinsames Gewinde aufweisen und wobei der Gewindering mittels einer Anzahl parallel zu seiner Achse sich erstreckender, jeweils für sich nachstellbarer Schrauben, die auf einem mittleren Umfang gleichmäßig verteilt angeordnet sind, verspannbar ist, wobei die Schrauben in den Konterring eingeschraubt sind, den Zwischenring mit Spiel durchsetzen und sich am Stellring abstützen. Bei dieser bekannten Maschinenelementen-Lösung kommen also insgesamt drei Ringkomponenten zum Einsatz, die über sog. Membranteile mit dünnwandig ausgebildeten Wandabschnitten in Hintereinanderreihung miteinander permanent verbunden sind. Als Einstelleinrichtung dienen hier mehrere gleichmäßig um den Außenumfang des Gewinderings verteilte Einstell- oder Schraubenbolzen.

Bei einer vergleichbaren bekannten Lösung, siehe DE 10 2004 003 183 A1, ist zur Unterteilung in eine als Stellring dienende Ringkomponente und eine als Konterring dienende Ringkomponente, die beide mit gleichem Innengewinde versehen sind, eine von der Innenumfangsfläche ausgehende Ringnut vorgesehen, wobei wiederum eine Verbindung über ein sog. Membranteil in Form eines dünnwandigen Wandabschnittes vorgesehen ist. Wiederum dienen mehrere gleichmäßig um den Außenumfang verteilte Einstell-Schraubenbolzen als Einstelleinrichtung.

Bei diesen einstückigen Lösungen mit sog. Membranteilen gestaltet sich die Fertigung verhältnismäßig aufwendig, weil die in Frage kommenden Werkstoffe, wie Edelstähle oder Titan, schwer zerspanbar sind, was der wirtschaftlichen Fertigung der Membranteile hinderlich ist.

Um die mit den genannten einstückigen Lösungen verbundenen Nachteile zu vermeiden, ist ausweislich der DE 199 12 068 B4 ein Maschinenelement der eingangs genannten, zweiteiligen Art bekannt. Dadurch, dass hierbei die als Sicherungsring und die als Stellring dienende Ringkomponente als eigenständige Bauteile ausgeführt sind, erübrigt sich zwar die Ausbildung einer nachgiebigen Membran, so dass damit verbundene fertigungstechnische Probleme und die damit verbundenen Beschränkungen hinsichtlich der Werkstoffwahl in Wegfall kommen. Ein wesentlicher Nachteil besteht jedoch in der hohen Anzahl der Einzelteile, die bei dieser bekannten Lösung als Funktionsteile vorgesehen sind.

Die als Stellring dienende Ringkomponente und die als Sicherungsring dienende Ringkomponente sind bei dieser Lösung selbst bei Fehlen der Spannschrauben der Einstelleinrichtung derart miteinander gekuppelt, dass sie eine zwangsgeführte Einheit bilden, bei der die Ringkomponenten bezüglich Orientierung und Steigung der Gewinde miteinander in Bezug bleiben. Hierfür sind Verbindungsbolzen vorgesehen, die die als Sicherungsring dienende Ringkomponente durchgreifen, mit ihrem Schaft in Sackbohrungen der als Stellring dienenden Komponente verpresst sind und mit ihren Bolzenköpfen relative Axialbewegungen zwischen den Ringkomponenten auf einen Maximalabstand begrenzen. Zu der erhöhten Anzahl der Bauteile kommt noch der für die Herstellung der Presspassungen an den Bolzen erforderliche Fertigungsaufwand hinzu.

Ein weiterer Nachteil besteht darin, dass in der den Sicherungsring bildenden Ringkomponente eine erhöhte Anzahl durchgehender Bohrungen auszubilden ist. Um eine Schwächung der Struktur in Grenzen zu halten, sind daher bei der bekannten Lösung zusätzlich zu drei Bohrungen für die Verbindungsbolzen lediglich drei Bohrungen für je eine Spannschraube vorgesehen, was zu einer ungünstigen Verteilung der Spannkraft führt. Trotz der Beschränkung auf eine geringe Anzahl von Spannschrauben ist die Strukturfestigkeit der als Sicherungsring dienenden Komponente beeinträchtigt, weil bei der bekannten Lösung, wie in der Fig.5 der Druckschrift gezeigt ist, zusätzlich drei weitere Gewindebohrungen für je eine Einstellschraube vorgesehen sind, die als Montagehilfe dienen, wodurch sich die Anzahl durchgehender Bohrungen auf neun erhöht. Der Herstellaufwand erhöht sich bei der bekannten Lösung zusätzlich durch Schraubenfedern, die die mittels der Verbindungsbolzen gekuppelten Ringkomponenten kraftschlüssig auf einem axialen Maximalabstand halten.

Ausgehend von diesem Stand der Technik stellt sich die Erfindung die Aufgabe, ein Maschinenelement der eingangs genannten Gattung zur Verfügung zu stellen, das sich durch eine einfache, kostengünstig herstellbare Bauweise auszeichnet.

Erfindungsgemäß ist diese Aufgabe durch ein Maschinenelement gelöst, das die Merkmale des Patentanspruchs 1 in seiner Gesamtheit aufweist.

Erfindungsgemäß ist vorgesehen, dass ausschließlich die Spannschrauben der Einstelleinrichtung den Abstandsraum zwischen den Ringkomponenten durchgreifen und dass alle möglichen Einstellpositionen der jeweiligen Ringkörper zueinander zwischen der Montage- und der Festlegestellung mittels dieser Spannschrauben veranlasst sind. Die Fertigung ist zum einen dadurch vereinfacht, dass als Einzelteile lediglich die beiden Ringkomponenten und die Spannschrauben erforderlich sind. Zudem erübrigt sich die Ausbildung einer Presspassung für die Ringkomponenten kuppelnden Verbindungsbolzen, ferner erübrigen sich die Kosten für weitere Einzelteile, wie Federanordnungen oder Einstellschrauben. Da bei der Erfindung beide Ringkomponenten ohne Zwangsführung mittels Verbindungsbolzen frei handhabbar und/oder austauschbar sind, ermöglicht die Erfindung die Ausbildung eines Baukastensystems, bei dem, je nach den Anforderungen im jeweiligen Anwendungsfall, der Stellring und der Sicherungsring hinsichtlich Werkstoff und Dimensionierung frei wählbar sind.

Gemäß dem kennzeichnenden Teil des Anspruchs 1 besteht eine wesentliche Besonderheit der Erfindung darin, dass durch die Trennung zwischen Stell- und Sicherungsring deren Funktionsbereiche, wie Gewinde und/oder Plananlageflächen, entsprechend ihrer Funktion unterschiedlich beschichtet sind.

So kann eine Beschichtung mit hohem Reibungskoeffizienten im Gewinde des Sicherungsringes zur besseren Sicherungswirkung vorgesehen sein und eine Beschichtung mit geringem Reibungskoeffizienten im Gewinde und an der Planfläche des Stellringes zur Vermeidung von Skick-Slip-Effekten und zur besseren Umsetzung des Anzugsmoments der Spannschrauben in axiale Vorspannkraft.
Die bei der erfindungsgemäßen Lösung eingesetzten Ringkörper sind bevorzugt gleichmäßig rund ausgebildet und bilden einen kreisförmig geschlossenen Gegenstand aus. Der jeweilige Ringkörper ist hohlzylindrisch ausgebildet; kann aber auch als massiver, geschlossener Körper ausgebildet sein, insbesondere wenn der dahingehende Ringkörper mit einem Außengewinde in korrespondierende Innengewindestrecken von hohlzylindrischen Drittbauteilen einzusetzen, insbesondere einzuschrauben ist. Auch kann die Außenkontur des Ringkörpers anstelle der genannten gleichmäßig runden Kreisringfläche ein Viel- oder Mehreck sein und insbesondere auch eine unregelmäßige Außenkontur aufweisen, um dergestalt eine Angriffsfläche für Festlegewerkzeuge und Handhabungssysteme zu bilden.

Die Spannschrauben der Einstelleinrichtung, die auf einem koaxialen Teilkreis gleichmäßig an den einzelnen zuordenbaren Ringkörpern angreifen und die den vorzugsweise spaltförmig ausgebildeten Abstandsraum achsparallel durchgreifen, können, da keine weiteren Durchgangsbohrungen erforderlich sind, in größerer Anzahl ausgebildet sein, beispielsweise können sechs Spannschrauben ohne wesentliche Beeinträchtigung der Strukturfestigkeit vorgesehen sein.

Mit Vorteil können die Schraubenköpfe der Spannschrauben im festgelegten Montagezustand innerhalb der betreffenden Ringkomponente vollständig integriert sein, so dass die Spannschrauben die axiale Abmessung des Maschinenelements nicht vergrößern.

Bei vorteilhaften Ausführungsbeispielen weisen die jeweiligen Ringkörper eine Mittenausnehmung auf, in die ein Innengewinde des jeweiligen Ringkörpers ausmündet. Bei dieser Ausführungsform bildet das Maschinenelement eine Stellmutter auf einem ein Außengewinde aufweisenden Bauteil.

Vorzugsweise weisen die konzentrisch zueinander angeordneten Ringkörper jeweils gleiche Innen- und Außendurchmesser auf, wobei die Innengewinde für jeden Ringkörper gleich ausgebildet sind.

In vorteilhafter Weise lassen sich zumindest zwei Ringkörper mit der Einstelleinrichtung als Montagesatz auf dem Drittbauteil derart festlegen, dass nach Positionieren des Maschinenelements auf dem Drittbauteil der als Stellring dienende eine Ringkörper gegenüber dem als Sicherungsring dienenden weiteren Ringkörper ausschließlich mittels der Spannschrauben der Einstelleinrichtung verspannt ist.

Vorzugsweise beträgt die axiale Erstreckung des spaltförmigen Abstandsraums zwischen den Ringkörpern wenige Gewindegänge der Innengewinde der Ringkörper, vorzugsweise nur einen Gewindegang oder einen Teil desselben.

Für eine einfache und sichere Positionierung des Maschinenelements kann der als Stellring dienende Ringkörper außenumfangsseitig mindestens eine Angriffsstelle für den Angriff eines Festlegewerkzeuges aufweisen.

Bei dem erfindungsgemäß ausgebildeten Maschinenelement hebt sich beim Verspannen der benachbart angeordneten Ringkörper mittels der Spannschrauben der Einstelleinrichtung das Gewindeflankenspiel zwischen den Innengewinden der genannten Ringkörper und dem jeweils zuordenbaren Gewindeabschnitt mindestens eines Außengewindes des Drittbauteils in entgegengesetzten Richtungen auf, so dass das Maschinenelement eine positionsgesicherte Stellmutter bildet.

Ein zusätzlicher Vorteil der Erfindung besteht darin, dass, da die Ringkomponenten gesondert handhabbare Bauteile bilden, sie als Bausatz aus den Teilen Sicherungsring, Stellring und Spannschrauben verpackt werden können, so dass der Kunde den Bausatz zusammenbauen muss. Für den Hersteller ergibt sich dadurch eine Einsparung an Montagekosten. Weiterhin lässt sich zwischen die Ringkomponenten ein Kunststoffring zwischenlegen oder einvulkanisieren, um im Abstandsraum eine Abdichtung zu bilden. Dies ist z.B. in der Lebensmittelindustrie zur Vermeidung von Schmutznestern vorteilhaft. Gleichzeitig kann durch einen Kunststoffring eine Federwirkung zwischen den Komponenten erzielt werden.

Nachstehend ist die Erfindung anhand eines in der Zeichnung dargestellten Ausführungsbeispiels im Einzelnen erläutert.
Es zeigen:
- Fig. 1: eine in Explosionsdarstellung gezeigte perspektivische Schrägansicht des Ausführungsbeispiels des erfindungsgemäßen Maschinenelements;
- Fig. 2: eine perspektivische Schrägansicht des Ausführungsbeispiels, wobei die Montagestellung gezeigt ist;
- Fig. 3: eine Draufsicht auf Fig. 2 und
- Fig. 4: eine Schnittdarstellung des in Montagestellung befindlichen Ausführungsbeispiels, entsprechend der Schnittlinie IV - IV von Fig. 3.

Das in den Figuren gezeigte Ausführungsbeispiel des erfindungsgemäßen Maschinenelements, das man fachsprachlich mit Stellmutter oder Gewindering bezeichnet, weist zwei Ringkomponenten 10, 12 auf, wie sie an Drittbauteilen, beispielsweise Achsen, Wellen oder Naben, festlegbar sind. Hierfür weisen die beiden Ringkomponenten 10, 12 auf ihrer jeweiligen Innenumfangsseite zwei durchgehende Gewindeabschnitte 14, 16 auf, die mit entsprechend zuordenbaren Gewindeabschnitten von Drittbauteilen (nicht dargestellt) in üblicher Weise durch Aufschrauben in Verbindung bringbar sind. Mindestens die eine Ringkomponente 10 ist auf die weitere Ringkomponente 12 in axialer Richtung mittels der Einstelleinrichtung in einer Zustellbewegung zubewegbar, um dergestalt die verschiedenen miteinander in Eingriff befindlichen Gewindeabschnitte 14, 16 in spielfreier Weise gegenseitig zu verspannen und dergestalt die Stellmutter positionssicher am Drittbauteil (nicht dargestellt) festzulegen. Die Einstelleinrichtung ist durch Spannschrauben 18 gebildet.

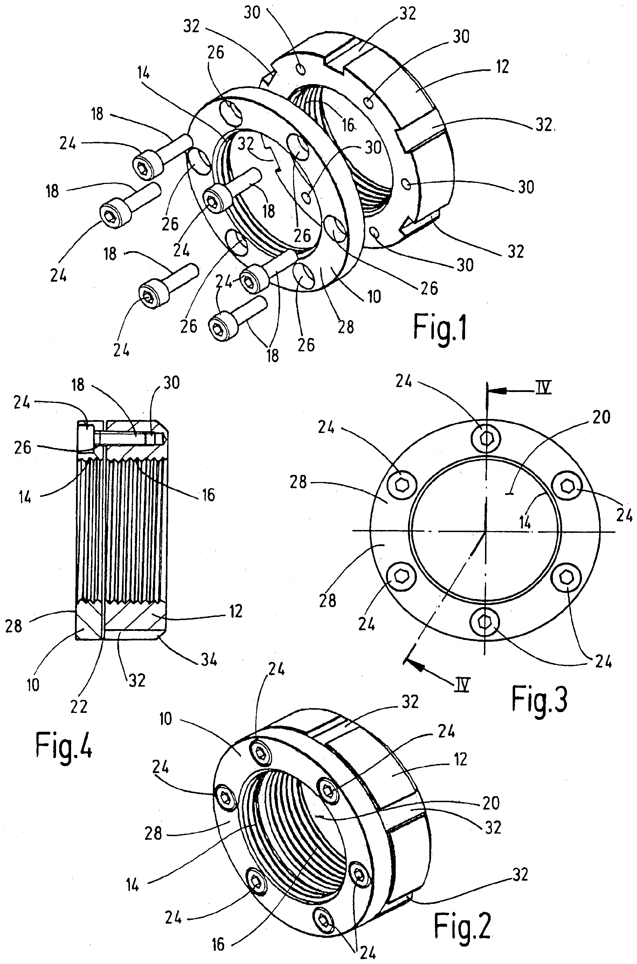

Die Ringkomponenten 10, 12 haben die Form kreiszylindrischer Ringkörper, wobei die axiale Erstreckung der als Stellring dienenden Ringkomponente 12 größer ist als die axiale Erstreckung der als Sicherungsring dienenden Ringkomponente 10. Mit ihren Innengewindeabschnitten 14, 16 umgeben die Ringkomponenten 10, 12 eine mit 20 bezeichnete Mittenausnehmung (Fig. 2 und 3). Wie Fig. 1 bis 3 zeigen, verfügt die Einstelleinrichtung über insgesamt sechs Spannschrauben 18, wobei diese bei der Montageposition jeweils achsparallel einen Abstandsraum in Form eines Spalts 22 zwischen den Ringkomponenten 10, 12 durchgreifen. Die Spannschrauben 18 sind auf einem zur Achse der Ringkomponenten 10, 12 konzentrischen Teilkreis gleichmäßig verteilt angeordnet und stehen vorzugsweise in jeder Einschraubsituation respektive jeder Einstellsituation der beiden Ringkomponenten 10, 12 nicht auf der Unterseite der Komponente 12 vor, die von den beiden benachbarten Stirnseiten der Komponenten 10, 12 abgewandt ist.

Beim vorliegenden Beispiel sind die Spannschrauben 18 als Innensechskantschrauben ausgebildet, deren Köpfe 24 jeweils in einem radial erweiterten Endabschnitt einer Durchgangsbohrung 26 der Ringkomponente 10 versenkt aufnehmbar sind, so dass die Köpfe 24 bei Montage- und Festlegeposition jeweils im Wesentlichen mit der äußeren Stirnfläche 28 der Ringkomponente 10 bündig sind. Die Stirnfläche 28 ist eine in einer Radialebene liegende Planfläche, ebenso wie dies bei der anderen Stirnfläche der Ringkomponente 10 sowie bei den beiden Stirnflächen der anderen Ringkomponente 12 der Fall ist, wobei diese Stirnflächen in den Figuren nicht beziffert sind. Die sechs rotationssymmetrisch verteilt angeordneten Spannschrauben 18 sind in jeweils zugeordnete, als Sackbohrungen ausgebildete Gewindebohrungen 30 der als Stellring dienenden Ringkomponente 12 einschraubbar. Für den Angriff eines Werkzeuges zur Positionseinstellung auf einer nicht dargestellten Welle oder Achse sind am Außenumfang der als Stellring dienenden Ringkomponente 12 Längsnuten 32 ausgebildet. Die als Stellring dienende Ringkomponente 12 weist an der der anderen Ringkomponente 10 entgegengesetzten stirnseitigen Planfläche eine Randabschrägung 34 (Fig. 4) auf.

Bei der Montagestellung, wie sie in Fig. 2 und 4 gezeigt ist, sind die Spannschrauben 18 derart in die Gewindebohrungen 30 eingeschraubt, dass die Weite des den Abstandsraum bildenden Spaltes 22 wenige Gewindegänge, vorzugsweise nur einen Gewindegang oder einen Teil eines Gewindeganges der Gewindeabschnitte 14, 16 der Ringkomponenten 10, 12 beträgt.

Bei auf die Achse oder Welle aufgeschraubten und positionierten Ringkomponenten 10, 12, wenn sich also die als Stellring dienende Ringkomponente 12 in der gewünschten Festlegeposition befindet, wird die Stellmutter aus der Montagestellung in die Festlegestellung überführt, indem die Spannschrauben 18 festgezogen werden. Die benachbart angeordneten Ringkomponenten 10, 12 werden dadurch verspannt, so dass sich das Gewindeflankenspiel zwischen den Innengewindeabschnitten 14, 16 der Ringkomponenten 10, 12 und dem jeweils zuordenbaren Gewindeabschnitt des betreffenden Außengewindes des (nicht dargestellten) Drittbauteils aufhebt und die Stellmutter dadurch positionssicher festgelegt ist.

Bei der bei der Erfindung vorgesehenen Trennung der als eigenständige Bauteile ausgeführten Ringkomponenten 10, 12 können deren einzelne Funktionsabschnitte, beispielsweise die Gewindeabschnitte 14, 16 und/oder ihre Planflächen, entsprechend ihrer Funktion unterschiedlich beschichtet werden. So ist es beispielsweise möglich, eine Beschichtung mit hohem Reibungskoeffizienten beim Gewindeabschnitt 14 der als Sicherungsring dienenden Ringkomponente 10 zur besseren Sicherungswirkung zu verwenden. Entsprechend könnte eine Beschichtung mit geringem Reibungskoeffizienten im Gewindeabschnitt 16 und/oder an stirnseitigen Planflächen der Ringkomponenten 10, 12 zur Vermeidung sog. Stick-Slip-Effekte und wegen der besseren Umsetzung des Anzugsmoments der Spannschrauben 18 in eine axiale Vorspannkraft gewählt werden. Die voneinander vollständig separierten beiden Ringkomponenten 10, 12 weisen zumindest in ihrem Einbauzustand entlang ihrer einander zugewandten Stirnseiten einen vorgebbaren, im Wesentlichen dann gleich bleibenden axialen Abstand zueinander auf. Somit sind alle Stirnseitenflächen beider Ringkörper 10, 12 in jeder Einbaulage im Wesentlichen parallel zueinander angeordnet und Verbindungsbereiche zwischen den beiden Ringkörpern 10, 12, wie Membranstellen oder Verbindungsbrücken sind nicht vorhanden. Auch ist der jeweilige Ringkörper 10, 12 nach außen hin umfangsseitig geschlossen ausgebildet und weist keine Schlitze oder sonstige Eingriffsstellen auf bis auf die Längsnuten 32 für den Angriff eines Betätigungswerkzeuges am Ring 12.

Bei der Erfindung sind die Ringkomponenten 10, 12 ausschließlich durch die Spannschrauben 18 der Einstelleinrichtung angesteuert. Da zwischen den einander benachbarten Stirnflächen der Ringkomponenten 10, 12 ein Abstandsraum in Form eines mediendurchlässigen Spalts 22 vorhanden ist, kann dieser durch Zwischenlegen oder Einvulkanisieren eines zusätzlichen Kunststoffringes (nicht dargestellt) abgedichtet werden, was beispielsweise in der Lebensmittelindustrie zur Vermeidung von sog. Schmutznestern vorteilhaft sein kann. Gleichzeitig kann durch den Kunststoffring eine Feder- oder Dämpfungswirkung erzielt werden, die die Einstellung der beiden Ringkomponenten 10, 12 mittels der Spannschrauben 18 zueinander beeinflusst. Die einzelnen Ringkomponenten 10, 12 können auch jeweils wahlweise ein Außengewinde anstatt eines Innengewindes aufweisen, so dass man eine zweiteilige Sicherungsschraube (nicht dargestellt) in üblicher Weise erhält. Ferner könnten Innen- und Außendurchmesser für die jeweilige Ringkomponente 10, 12 unterschiedlich gewählt sein in Abhängigkeit des jeweils im Bereich der inneren Mittenausnehmung 20 von Ringkomponente 10 und Ringkomponente 12 aufzunehmenden Drittbauteils.

Insgesamt ist mit der erfindungsgemäßen Maschinenelement-Lösung die Realisierung eines Baukastensystems möglich, bei dem sich beispielsweise unterschiedlich ausgebildete Ringkomponenten 12 als Lastteil der Sicherungs- oder Stellmutter mit nur einer Art von Ringkomponenten 10 als Sicherungsteil kombinieren lassen. Bei Wegfall eines Membransystems als Verbindungselement zwischen den Ringkomponenten 10, 12 kann ferner die gesamte Stellmutter als Maschinenelement in der Baulänge entsprechend reduziert werden. Bei Wegfall eins Verbindungselements zwischen den Ringkomponenten 10, 12 lässt sich das Maschinenelement auch als Verpackungseinheit mit nicht montierten Einzelteilen an den Kunden oder Interessenten ausliefern, der dann vor Ort das Maschinenelement als Ganzes erst aufbaut und insoweit an dem Drittbauteil vervollständigt. Dies hilft, Montagekosten für den Sicherungsmutterhersteller einzusparen.

Lässt man für die Ringkomponenten 10, 12 die Innengewindeabschnitte 14, 16 weg, ergeben sich insoweit plane, zylindrische Innenumfangsflächen, die die innere Mittenausnehmung 20 radial nach außen hin begrenzen, so dass insoweit bei gleichem erfindungsgemäßem Aufbau anstelle einer Stellmutter ein Spannsatz oder eine Führungsbuchse erhalten ist und/oder wesentliche Teile eines Lagers erhalten sind, beispielsweise in Form eines Radial-Gleitlagers (nicht dargestellt). Ferner können, wie im Stand der Technik aufgezeigt, je nach Anwendungsfall mehr als zwei Ringkomponenten 10, 12 zum Einsatz kommen.

## Patentansprüche

1. Maschinenelement, insbesondere in Form einer Stellmutter, aufweisend einzelne Ringkomponenten (10, 12), die an Drittbauteilen, wie beispielsweise Achsen, Naben oder Wellen, mittels Innen- und/oder Außengewinde festlegbar sind, von denen mindestens eine Ringkomponente (10) auf mindestens eine weitere Ringkomponente (12) in einer axialen Richtung gesehen mittels einer Einstelleinrichtung mit mehreren Spannschrauben (18) in einer Zustellbewegung von einer Montagestellung in eine Festlegestellung und umgekehrt bewegbar ist, wobei mindestens die eine und die andere Ringkomponente (10, 12) als eigenständige Bauteile ausgeführt sind, die mit ihren benachbart einander zugewandten Stirnseiten einen Abstandsraum (22) begrenzen, der nach allen Seiten sich zur Umgebung hin öffnet, wobei ausschließlich die Spannschrauben (18) der Einstelleinrichtung den Abstandsraum (22) durchgreifen und wobei alle möglichen Einstellpositionen der jeweiligen Ringkörper (10, 12) zueinander zwischen der Montage- und der Festlegestellung mittels dieser Spannschrauben (18) veranlasst sind, **dadurch gekennzeichnet, dass** Funktionsabschnitte der beiden als eigenständige Bauteile ausgeführten Ringkomponenten (10, 12) entsprechend ihrer Funktion unterschiedlich beschichtet sind.

2. Maschinenelement nach Patentanspruch 1, **dadurch gekennzeichnet, dass** die Funktionsabschnitte die Gewinde und/oder Plananlageflächen sind.

3. Maschinenelement nach Patentanspruch 1 oder 2, **dadurch gekennzeichnet, dass** eine Beschichtung mit hohem Reibungskoeffizienten bei einem Gewindeabschnitt (14) der als Sicherungsring dienenden Ringkomponente (10) zur besseren Sicherungswirkung verwendet wird und dass eine Beschichtung mit geringem Reibungskoeffizienten im Gewindeabschnitt (16) und/oder an stirnseitigen Planflächen der Ringkomponenten (10, 12) gewählt wird.

4. Maschinenelement nach einem der vorhergehenden Ansprüche, **dadurch gekennzeichnet, dass** die Spannschrauben (18) der Einstelleinrichtung auf einem koaxialen Teilkreis gleichmäßig an den einzelnen zuordenbaren Ringkörpern (10, 12) angreifen, die den vorzugsweise spaltförmig ausgebildeten Abstandsraum (22) achsparallel durchgreifen.

5. Maschinenelement nach einem der vorhergehenden Ansprüche, **dadurch gekennzeichnet, dass** die Schraubenköpfe (24) der Spannschrauben (18) im festgelegten Montagezustand innerhalb der einen Ringkomponente (10) vollständig integriert sind.

6. Maschinenelement nach einem der vorstehenden Ansprüche, **dadurch gekennzeichnet, dass** die jeweiligen Ringkörper (10, 12) eine Mittenausnehmung (20) aufweisen, in die ein Innengewinde (14, 16) des jeweiligen Ringkörpers (10, 12) ausmündet.

7. Maschinenelement nach einem der vorstehenden Ansprüche, **dadurch gekennzeichnet, dass** die konzentrisch zueinander angeordneten Ringkörper (10, 12) jeweils gleiche Innen- und Außendurchmesser aufweisen und dass die Innengewinde (14, 16) für jeden Ringkörper (10, 12) gleich ausgebildet sind.

8. Maschinenelement nach einem der vorstehenden Ansprüche, **dadurch gekennzeichnet, dass** zumindest zwei Ringkörper (10 12) mit der Einstelleinrichtung (18) als Montagesatz sich auf dem Drittbauteil festlegen lassen und dass nach Positionieren des Maschinenelements auf dem Drittbauteil der als Stellring dienende eine Ringkörper (12) gegenüber dem als Sicherungsring dienenden weiteren Ringkörper (10) ausschließlich mittels der Spannschrauben (18) der Einstelleinrichtung verspannt ist.

9. Maschinenelement nach einem der vorstehenden Ansprüche, **dadurch gekennzeichnet, dass** die axiale Erstreckung des spaltförmigen Abstandsraumes (22) wenige Gewindegänge der Innengewinde (14, 16) der Ringkörper (10, 12) beträgt, vorzugsweise nur einen Gewindegang oder einen Teil desselben beträgt.

10. Maschinenelement nach einem der vorstehenden Ansprüche, **dadurch gekennzeichnet, dass** der als Stellring dienende Ringkörper (12) außenumfangsseitig mindestens eine Angriffsstelle (32) für den Angriff eines Festlegewerkzeugs aufweist.

11. Maschinenelement nach einem der vorstehenden Ansprüche, **dadurch gekennzeichnet, dass** beim Verspannen der benachbart angeordneten Ringkörper (10, 12) mittels der Spannschrauben (18) der Einstelleinrichtung sich das Gewindeflankenspiel zwischen den Innengewinden (14, 16) der genannten Ringkörper (10, 12) und dem jeweils zuordenbaren Gewindeabschnitt mindestens eines Außengewindes des Drittbauteils in entgegengesetzten Richtungen aufhebt.

## Claims

1. A machine element, in particular in the form of an adjusting nut, having individual ring components (10, 12), which can be fixed to third-party components such as for example axles, hubs or shafts by means of internal and/or external threads, of which at least one ring component (10) can be moved, viewed in an axial direction, towards at least one further ring component (12) by means of an adjusting device with several clamping screws (18) in an advancing movement from an assembled state into a locking position and vice versa, wherein at least the one and the other ring component (10, 12) are provided as discrete components, which delimit a separation space (22) with their end-faces which are adjacent and face each other, where said separation space (22) opens on all sides to the surrounding space, wherein only the clamping screws (18) of the adjusting device pass through the separation space (22) and wherein all possible adjustment positions of the respective ring components (10, 12) to each other between the assembled state and the locking position are initiated by means of these clamping screws (18), **characterised in that** functional sections of the two ring components (10, 12) provided as discrete components are coated differently, according to their function.

2. The machine element according to claim 1, **characterised in that** the functional sections are the threads and/or planar contact surfaces.

3. The machine element according to claim 1 or 2, **characterised in that** a coating with high friction coefficient is used in a thread section (14) of the ring component (10) serving as locking ring for better locking effect and that a coating with low friction coefficient is chosen in the thread section (16) and/or at end-face planar surfaces of the ring components (10, 12).

4. The machine element according to one of the preceding claims, **characterised in that** the clamping screws (18) of the adjusting device engage with the individual associable annular bodies (10, 12) evenly on a coaxial reference circle, and which preferably pass through the gap-like separation space (22) axially parallel.

5. The machine element according to one of the preceding claims, **characterised in that** the screw heads (24) of the clamping screws (18) are fully integrated inside the one ring component (10) when in locking position.

6. The machine element according to one of the preceding claims, **characterised in that** the respective annular bodies (10, 12) have a central opening (20) into which an internal thread (14, 16) of the respective annular body (10, 12) leads.

7. The machine element according to one of the preceding claims, **characterised in that** the annular bodies (10, 12) arranged concentrically to each other each have identical internal and external diameters and that the internal threads (14, 16) are the same for each annular body (10, 12).

8. The machine element according to one of the preceding claims, **characterised in that** at least two annular bodies (10, 12) with the adjustment device (18) can be attached to the third-party component as an assembly kit, and that after positioning of the machine element on the third-party component, the one annular body (12) serving as adjusting ring is clamped to the further annular body (10) serving as locking ring solely by means of the clamping screws (18) of the adjusting device.

9. The machine element according to one of the preceding claims, **characterised in that** the axial extension of the gap-like separation space (22) is only a few thread turns of the internal threads (14, 16) of the annular bodies (10, 12), preferably only one thread turn or a part of same.

10. The machine element according to one of the preceding claims, **characterised in that** the annular body (12) serving as adjusting ring has, on the outer circumference, at least one contact point (32) to provide grip for a fastening tool.

11. The machine element according to one of the preceding claims, **characterised in that**, when clamping the adjacently arranged annular bodies (10, 12) by means of the clamping screws (18) of the adjusting device, the thread flank clearance between the internal threads (14, 16) of the named annular bodies (10, 12) and the respective associable thread section of the at least one external thread of a third-party component is taken up in the opposite direction.

## Revendications

1. Elément de machine, notamment sous la forme d'un écrou de serrage ayant divers composants (10, 12) annulaires, qui peuvent être fixés à des pièces tierces, comme par exemple des axes, des moyeux ou des arbres, au moyen de taraudages et/ou de filetages, dont au moins un composant (10) annulaire peut, sur au moins un autre composant (12) annulaire, considéré dans la direction axiale, au moyen d'un dispositif de réglage ayant plusieurs vis (18) de blocage, passer, suivant un mouvement d'avance, d'une position de montage à une position de fixation et inversement, dans lequel au moins le un et l'autre composants (10, 12) annulaires sont réalisés sous la forme de pièces indépendantes, qui délimitent, par leurs côtés frontaux voisins tournés l'un vers l'autre, un espace (22) de mise à distance, qui est ouvert vers l'atmosphère ambiante de tous côtés, dans lequel, exclusivement les vis (18) de blocage du dispositif de serrage traversent l'espace (22) de mise à distance et dans lequel toutes les positions possibles de réglage des composants (10, 12) annulaires, les uns par rapport aux autres, entre la position de montage et la position de fixation, sont provoquées au moyen de ces vis (18) de blocage, **caractérisé en ce que** des parties fonctionnelles des deux composants (10, 12) annulaires, réalisées sous forme de pièces indépendantes, sont revêtues différemment, conformément à leur fonction.

2. Elément de machine suivant la revendication 1,
**caractérisé en ce que** les parties fonctionnelles sont les filetages et/ou des surfaces de contact planes.

3. Elément de machine suivant la revendication 1 ou 2,
**caractérisé en ce qu'**un revêtement, ayant un grand coefficient de frottement, est utilisé pour un meilleur effet d'arrêt pour une partie (14) filetée du composant (10) annulaire servant de bague d'arrêt et **en ce qu'**un revêtement, ayant un coefficient de frottement petit, est choisi dans la partie (16) filetée et/ou sur des surfaces planes du côté frontal des composants (10, 12) annulaires.

4. Elément de machine suivant l'une des revendications précédentes,
**caractérisé en ce que** les vis (18) de blocage du dispositif de réglage attaquent, sur un cercle partiel coaxial, uniformément, les composants (10, 12) annulaires pouvant leur être associés individuellement, qui traversent, parallèlement à l'axe, l'espace (22) de mise à distance constitué, de préférence, sous la forme d'une fente.

5. Elément de machine suivant l'une des revendications précédentes,
**caractérisé en ce que** les têtes (24) des vis (18) de blocage sont, à l'état de montage fixé, intégrées complètement dans le un composant (10) annulaire.

6. Elément de machine suivant l'une des revendications précédentes,
**caractérisé en ce que** les composants (10, 12) annulaires ont chacun un évidement (20) médian, dans lequel débouche un taraudage (14, 16) du composant (10, 12) annulaire respectif.

7. Elément de machine suivant l'une des revendications précédentes,
**caractérisé en ce que** les composants (10, 12) annulaires, disposés concentriquement les uns par rapport aux autres, ont chacun, de mêmes diamètres intérieurs et extérieurs et **en ce que** les taraudages (14, 16) sont constitués pareillement pour chaque composant (10, 12) annulaire.

8. Elément de machine suivant l'une des revendications précédentes,
**caractérisé en ce qu'**au moins deux composants (10, 12) annulaires peuvent, par le dispositif (18) de réglage, comme jeu de montage, être fixés sur la pièce tierce et **en ce que**, après la mise en position de l'élément de machine sur la pièce tierce, le un composant (12) annulaire, servant de bague de réglage, est, par rapport à l'autre composant (10) annulaire, servant de bague d'arrêt, bloqué exclusivement au moyen des vis (18) de blocage du dispositif de serrage.

9. Elément de machine suivant l'une des revendications précédentes,
**caractérisé en ce que** l'étendue axiale de l'espace (22) de mise à distance en forme de fente représente peu de pas des taraudages (14, 16) des composants (10, 12) annulaire, de préférence, seulement un pas ou une partie de celui-ci.

10. Elément de machine suivant l'une des revendications précédentes,
**caractérisé en ce que** le composant (12) annulaire, servant de bague de réglage, a, du côté du pourtour extérieur, au moins un point (32) d'attaque d'un outil de fixation.

11. Elément de machine suivant l'une des revendications précédentes,
**caractérisé en ce que**, lors du serrage des composants (10, 12) annulaires voisins, au moyen des vis (18) de blocage du dispositif de réglage, le jeu des flancs de filet entre les taraudages (14, 16) desdits composants (10, 12) annulaires et la partie filetée qui peut leur être associée respectivement, annule dans des sens contraires au moins un filet extérieur de la pièce tierce.
